# FASCICULE DE BREVET EUROPEEN

(11) **EP 1 197 480 B1**
(45) Date de publication et mention de la délivrance du brevet: **27.04.2005**
(21) Numéro de dépôt: 01402536.5
(22) Date de dépôt: 02.10.2001
(51) Int. Cl.: C04B 28/04

(54) **Composition cimentaire, son utilisation pour la réalisation de chape liquide autonivelante et chape ainsi obtenue**
Zementzusammemsetzung, seine Verwendung zur Herstellung eines selbstnivellierenden Estrichs und so erhaltener Estrich
Cement composition, its use for making a selfleveling floor and floor thus obtained

(30) Priorité: 13.10.2000 FR 0013117
(43) Date de publication de la demande: 17.04.2002
(73) Titulaire: CIMENTS FRANCAIS, F-92800 Puteaux (FR)
(72) Inventeur: Ambroise, Jean, 69530 Brignais (FR); Colombet, Pierre, 78980 Longnes (FR); Grelaud, Jean-Pierre, 78520 Sandrancourt (FR); Pasquier, Michel 1, Rue André Lebourblanc, 78590 Noisy Le Roi (FR)
(74) Mandataire: Loyer, Bertrand

(56) Documents cités:
- DE-A- 3 909 070
- FR-A- 2 780 396
- PATENT ABSTRACTS OF JAPAN vol. 1999, no. 11, 30 septembre 1999 (1999-09-30) & JP 11 157898 A (Y. HODAKA ET AL.), 15 juin 1999 (1999-06-15)

## Description

La présente invention concerne le domaine des compositions cimentaires, utilisées pour la réalisation de chapes liquides, en particulier autonivelantes, leur procédé de fabrication et les chapes ainsi réalisées.

### 1. Etat de l'art

Une chape fluide (ou liquide) est formée à partir d'une composition cimentaire à base de liant, très souvent d'un agrégat, qui est généralement du sable, et d'au moins un adjuvant, qui est un fluidifiant (appelé également superplastifiant ou dispersant), qui transforme le mélange en une pâte dont la consistance est proche après gâchage de celle de l'eau. Ceci explique le caractère autonivelant et autolissant du produit. De telles chapes sont très appréciées dans les domaines de la construction et du bâtiment de par leur aspect (un véritable miroir), leur grande facilité de mise en oeuvre, et leur aptitude à «rattraper» des niveaux inégaux et à enrober des canalisations de chauffage par le sol.

Les différents types de chapes se distinguent par leur granulométrie, la nature de leur liant et leur système de conditionnement.

Dans l'Art Antérieur, la granulométrie a une influence sur l'aspect de surface. Plus la taille du plus gros granulat (ou agrégat) est élevée, plus la surface est rugueuse. En utilisant un sable inférieur à 1 mm environ, on obtient une surface parfaitement lisse. Au-delà, le sable affleure en surface en lui conférant un certain relief à cause de l'apparition de protubérances qui commencent à être bien visibles à l'oeil nu lorsque la limite supérieure de son étendue granulaire dépasse environ quelques mm.

Les liants les plus utilisés actuellement sont soit le ciment alumineux, complété par du sulfate de calcium hydraté ou non pour que se forme l'ettringite comme produit d'hydratation et pour réduire ainsi le retrait après séchage, soit l'anhydrite naturelle ou synthétique (sulfate de calcium anhydre) qui se transforme en gypse en fin de réaction.

Les chapes «anhydrite» présentent l'inconvénient majeur d'être après séchage très sensibles à l'eau. Toute réhumidification de la chape anhydrite par remontée de dalle support ou en provenance des produits de pose de revêtement est donc prohibée, ce qui complique les conditions de réalisation (local clos, couverture par ex.) qui doivent être scrupuleusement respectées sous peine d'engendrer rapidement de graves désordres dans la tenue du revêtement de sol (la réhumidification peut diminuer de 40 % la résistance de la chape).

En outre les chapes anhydrites présentent en séchant des remontées de gypse qui cristallise, accompagnées de remontées de laitance. Efflorescences, laitance molle ou croûte vitrifiée qui en résultent doivent alors être éliminées par ponçage, brossage ou rabotage.

L'utilisation de ciment alumineux comme liant plutôt que l'anhydrite offre l'avantage de l'insensibilité à l'eau lorsque la chape est durcie.

En ce qui concerne le conditionnement, ces produits existent sous forme sèche, c'est-à-dire, prête à gâcher ou sous forme de mortier fluide. Le cas du mortier fluide est particulièrement intéressant pour une livraison sur le chantier par camion toupie suivie d'un transfert par pompage ; le mortier est alors préparé et gâché dans une centrale à béton, puis livré prêt à l'emploi. Il ne reste plus à l'utilisateur qu'à réaliser la coulée de la chape. Outre le nombre limité d'opérations à réaliser par l'utilisateur et le gain de temps ou de main d'oeuvre qui en résulte, un tel conditionnement garantit la régularité de la qualité du produit.

Cependant, dans le cas du conditionnement sous forme de mortier fluide, prêt à l'emploi et fabriqué en centrale à béton, l'utilisation de ciment alumineux n'est pas judicieuse car la prise est rapide pour ce type de ciment (environ deux heures) si bien que le mortier perd sa caractéristique de fluidité indispensable au cours du transport. Ceci explique pourquoi les chapes liquides, pour lesquelles le liant est le ciment alumineux, sont conditionnées sous forme sèche, à gâcher sur le chantier juste avant de réaliser la coulée.

Pour un mortier fluide, il est donc préférable d'utiliser comme liant le ciment Portland qui présente un temps de prise franchement supérieur (quatre heures ou davantage).

Dans ce domaine, la demande de brevet EP-A-0 725 044 fait état d'une composition de mortier fluide comprenant du ciment Portland ordinaire avec comme agent de fluidification un dispersant acrylique obtenu par copolymérisation de monomères bien identifiés, auquel on ajoute un agent de viscosité, qui assure la cohésion ou stabilité (absence de ressuage et de sédimentation) du mortier, un agent antimousse, un accélérateur de prise et un agent réducteur de retrait. La composition comporte également des granulats (sable), et de l'anhydrite naturelle (en proportions notables supérieures à 5 % environ par rapport au ciment). Les propriétés d'une telle chape concernent la durée de fluidification (supérieure à 3 heures) sans ségrégation entre les différentes composantes minérales et l'eau, ségrégation généralement constatée pour les mortiers très fluidifiés. En d'autres termes, ce mortier fluide est cohésif ou stable, c'est-à-dire qu'il ne présente ni ressuage ni sédimentation. De telles propriétés sont compatibles avec le conditionnement de la chape sous forme de mortier fluide prêt à l'emploi, fabriqué en centrale et livrable par camion.

Par ailleurs, la composition de EP-A-0 725 044 présente une autre propriété importante, qui n'est pas décrite dans le texte de la demande correspondante, mais qui est bien connue de l'homme de l'art. Cette propriété découle de la présence d'anhydrite. Elle consiste en une aptitude à limiter de façon notable l'effet néfaste d'une éventuelle dessiccation de la chape une fois posée et durcie, à l'occasion, par exemple, d'une augmentation rapide et importante de la température ambiante. L'effet néfaste en question est celui du relèvement des bords de la chape, ou gauchissement, et de la formation consécutive de macrofissurations sous l'effet de son propre poids. Cette pathologie, aussi appelée «curling» est liée au différentiel de retrait entre le fond et la surface de la chape, différentiel causé par un gradient d'humidité s'installant lors du séchage, notamment lors d'une augmentation brutale de la température ambiante. Le différentiel de retrait provoque l'apparition de contraintes mécaniques. L'instabilité qui en résulte est libérée lors du relèvement des bords. La présence d'anhydrite apporte un remède à cette pathologie parce qu'en s'hydratant par réaction chimique avec l'eau de gâchage et le ciment, elle se transforme en gypse et ettringite, molécules réputées comme susceptibles d'assurer la fonction de réservoir d'eau. Le réservoir ainsi constitué s'oppose à l'établissement d'un gradient d'humidité entre le fond et la surface de la chape lors d'un séchage rapide, donc à l'établissement d'un différentiel de retrait.

### 2. Problèmes posés

Cependant, la composition de la demande de brevet EP-A-0 725 044, bien qu'adaptée au transport, au coulage différé sur le chantier et à la réduction du phénomène de «curling», présente l'inconvénient de devoir être préparée et malaxée sur un site de production spécialisé parce qu'elle comporte de l'anhydrite. En effet, les centrales à béton classiques, pourtant prévues pour le mélange de granulats (le sable par exemple), de liants et d'adjuvants et pour leur malaxage avec de l'eau, n'autorisent pas l'utilisation d'anhydrite, qu'elle soit naturelle ou synthétique, même partiellement, parce que celle-ci polluerait nécessairement les installations de stockage, transport, mélange et malaxage, utilisées par ailleurs pour la production de béton prêt à l'emploi classique. Or, toute impureté d'anhydrite est absolument prohibée pour le béton classique à cause des risques de détérioration de ce dernier une fois durci liés à la formation retardée d'ettringite, risques bien connus de l'homme de l'art.

Par ailleurs, en ce qui concerne la mise en oeuvre des chapes 100 % anhydrite, il n'est pas possible de couler plus de 3 cm d'épaisseur en une seule passe, c'est à dire que pour la réalisation de chapes dont l'épaisseur est supérieure à cette valeur (par exemple pour des chapes destinées à enrober des canalisations de chauffage par le sol), il est nécessaire de couler une première couche de mortier fluide (environ 3 cm), d'attendre de 24 à 48 heures, puis de couler la seconde couche et de laisser reposer à nouveau. L'épaisseur de ces chapes ne dépasse donc pas 6 cm pour des raisons évidentes de rendement.
L'objet de la présente invention est donc de proposer une composition cimentaire pour chape fluide qui pallie les inconvénients précités, tout en présentant des propriétés habituellement requises pour tout mortier fluide, décrites ci-après :
- outre l'aspect parfaitement lisse évoqué ci-dessus, le mortier fluide doit conserver sa fluidité et sa cohésion ou stabilité (absence de ressuage) pendant au moins trois heures,
- l'absence de sédimentation, qui se mesure (plus précisément que le ressuage lorsque celui-ci est négligeable) après durcissement, est aussi requise,
- une fois coulé sous forme de plaque de faible épaisseur par rapport aux autres dimensions, puis durci, il doit présenter un gauchissement ou "curling" le plus faible possible, c'est-à-dire conserver sa planéité initiale même après séchage complet,
- enfin, le durcissement du mortier doit se produire avant 24 heures (après le malaxage en centrale à béton) de façon à ne pas pénaliser l'enchaînement des opérations ultérieures conduites par les autres corps de métier qui interviennent sur le chantier.

### 3. Description de l'invention

Pour pallier l'ensemble des inconvénients précités et satisfaire les propriétés requises ci-dessus, les inventeurs ont mis au point une composition cimentaire pour chape liquide (fluide) à base de liant et d'adjuvants, dont le liant comprend du ciment Portland, et les adjuvants comprennent au moins un fluidifiant et une combinaison d'un agent épaississant (dit classique) agissant par exclusion (ou encombrement) stérique et d'un agent épaississant de type gélifiant (ou associatif). Selon une variante préférée de l'invention, le liant comprend du ciment Portland, sans ajout supplémentaire de sulfate de calcium autre que le régulateur de prise (gypse introduit lors du broyage du clinker).

Les adjuvants peuvent également renfermer, outre les agents modificateurs de la rhéologie sus-mentionnés (fluidifiant et épaississants), un tensio-actif en vue de réguler la quantité d'air entraîné.

Une telle composition permet d'obtenir les propriétés requises pour une chape fluide conditionnée par exemple sous forme de mortier ou de béton. En effet elle concilie maniabilité élevée (conférant le caractère autonivelant), rhéologie maîtrisée (évitant la sédimentation et le ressuage) et «curling» réduit. Ne comportant pas d'anhydrite, la composition selon la variante préférée de l'invention peut être produite en centrale à béton classique. En outre, elle permet de réaliser en un seul coulage des chapes autonivelantes dont l'épaisseur dépasse 5 à 6 cm environ.

De plus, au regard de la difficulté de concilier la grande fluidité nécessaire à la mise en oeuvre (pompabilité et mise en place sous le simple effet gravitaire) et l'absence de sédimentation et de ressuage, la composition selon la présente invention, contrairement aux bétons et mortiers autonivelants ou autoplaçants connus qui exigent toujours un mélange granulaire très compact (c'est-à-dire en assurant une distribution granulaire aussi étendue que possible, ceci en particulier pour limiter les phénomènes de ségrégation) présente l'énorme avantage de s'affranchir de cette contrainte grâce à un profil rhéologique tel que la composition cimentaire est fluide sous contrainte (permettant de le pomper et de le répandre) et s'épaissit rapidement lorsqu'elle est au repos (évitant la sédimentation de granulat, le ressuage et la remontée des bulles d'air). Un tel profil s'obtient avec une combinaison équilibrée d'agents modificateurs de rhéologie, sans avoir recours à la maîtrise de la compacité du mélange granulaire qui de façon classique, s'obtiendrait en complétant la distribution granulaire du ciment par celle de particules fines, telles que des cendres, des fumées de silice ou de laitier broyé. A cet effet, de manière avantageuse la composition selon la présente invention comprend, pour 100 parties en poids de ciment Portland, de 1 à 5 parties d'un fluidifiant à base (méth)acrylate ou de type polynaphtalène sulfonate, ou mélamine sulfonate, et de préférence comprend, pour 100 parties de ciment Portland, de 0,03 à 1 partie de fluidifiant, de 0,02 à 1 partie d'agent épaississant agissant par exclusion stérique et de 0,01 à 0,5 partie d'agent épaississant de type gélifiant. Dans l'ensemble de ce document, les parties d'adjuvants sont des parties en poids de matière active.

Et de manière encore plus avantageuse, la composition comprend, pour 100 parties de ciment Portland, de 0,13 à 0,5 partie de fluidifiant, de 0,1 à 0,3 partie d'agent épaississant agissant par exclusion stérique et de 0,05 à 0,15 partie d'agent épaississant de type gélifiant.

Ainsi le matériau cimentaire (fluide et durci) possède la propriété de présenter une faible compacité, c'est-à-dire une porosité importante, mise en évidence par une faible densité.

Il est également apparu que la présence de tensio-actif dans la composition selon l'invention permet de réguler la quantité d'air présent dans le matériau final, donc sa porosité. Ainsi, une concentration de 0,01 à 0,15 partie de tensio-actif pour 100 parties en poids de ciment Portland permet de réguler la quantité d'air entraîné entre approximativement 15 et 20 % en volume dans le matériau final, correspondant à une densité de l'ordre de 1,6 à 1,9 environ.

La composition selon l'invention permet d'obtenir des chapes dont la résistance mécanique est suffisante après 24 heures, c'est-à-dire présentant une résistance mécanique d'au moins 0,9 MPa environ, ce qui évite de limiter trop longtemps l'accès au chantier.

En outre, de façon surprenante, bien que ne comportant pas d'anhydrite, la composition selon la variante préférée de l'invention présente également l'avantage d'une sensibilité au «curling» considérablement réduite, garantissant une planéité de la chape coulée, après son séchage complet.

La composition cimentaire selon l'invention est de manière habituelle et avantageuse, mélangée à un agrégat.

De préférence, l'agrégat est du sable de granulométrie inférieure ou égale à 5 mm environ.

Cet agrégat peut être présent dans des proportions très variables, allant par exemple de 250 à 500 parties pour 100 parties en poids de ciment. La composition selon l'invention présente également l'avantage d'obtenir des chapes avec une surface très lisse au niveau de laquelle ne viennent pas affleurer les plus gros granulats.

La consistance et l'ouvrabilité sont ainsi obtenues par un mélange équilibré d'agents modificateurs de rhéologie à savoir des fluidifiants (polyacrylate, polynaphtalène sulfonate, polymélamine sulfonate, lignosulfonates), des épaississants agissant par exclusion (ou encombrement) stérique (augmentation de la viscosité) et des épaississants dits associatifs agissant par gélification (création d'un réseau tridimensionnel).

La première classe d'épaississants a pour rôle d'augmenter la viscosité du milieu : ce sont des macromolécules, qui, en fonction de leur affinité avec la solution interstitielle et donc, de leur rayon de giration, augmentent de manière artificielle (par exclusion stérique) la fraction volumique solide effective et donc, la viscosité de la solution. C'est le cas des additifs solubles en milieu alcalin comme les ASE (alkali soluble emulsions), des dérivés cellulosiques plus particulièrement des éthers de cellulose comme l'hydroxyéthylcellulose, la méthylcellulose et des hydrocolloïdes d'origine végétale comme les gommes xanthane, guar, caroube qui, seuls, ne créent pas de zones de jonction intermacromoléculaires. C'est également le cas des polymères de synthèse hydrosolubles de forte masse moléculaire comme les poly(oxyde d'éthylène) et les polyacrylates de sodium réticulés, les alcools polyvinyliques.

La seconde classe d'épaississants dits associatifs agissant par gélification est constituée de polymères hydrosolubles portant quelques groupements hydrophobes aptes à se réunir en micelles et permettant de créer un réseau tridimensionnel, non seulement par lui-même, mais aussi avec l'épaississant agissant par exclusion stérique. L'intérêt d'un tel réseau est que lorsqu'il est constitué, il provoque une forte augmentation de la viscosité. Par contre, lorsqu'il est soumis à une contrainte de cisaillement, il se détruit du fait de la faiblesse des liaisons de type micellaire. Un tel comportement rhéologique est tout à fait avantageux dans le cadre de la composition cimentaire de l'invention car cette forte viscosité au repos permet de s'affranchir des problèmes de sédimentation, de ségrégation, de ressuage et d'instabilité de l'air occlus. En outre, sous contrainte de cisaillement, l'effondrement de la viscosité confère au produit une excellente pompabilité et une ouvrabilité suffisante pour qualifier la composition cimentaire d'autonivelante et d'autolissante.

Comme agent épaississant de type gélifiant on peut choisir des polymères de synthèse hydrosolubles modifiés hydrophobes, par exemple à base acrylique ou uréthane tels que les polyacrylates (HMPA-Hydrophobically Modified Polyacrylates ou HASE-Hydrophobically Alkali Soluble Emulsion) ou des polyuréthanes (HEUR-Hydrophocally Modified Urethan Block Copolymer), ou encore des hydrocolloïdes, des polysaccharides et des polymères naturels ou semi-synthétiques hydrosolubles, tous étant modifiés hydrophobes.

L'épaississant associatif préféré est un copolymère bloc poly(oxyde d'éthylène) uréthane modifié hydrophobe (HEUR) habituellement synthétisé en faisant réagir un excès de diisocyanate avec un polyéthylène glycol. Au produit de cette première réaction est ensuite additionné un alcool primaire ou une amine primaire (par exemple un alcool gras ou une amine grasse de radical C₈ à C₃₀ simple ou possédant des groupements fluor, alkyle, alkène,...).

Par ailleurs, la combinaison selon l'invention des deux types d'épaississants présente l'avantage supplémentaire de modifier la rhéologie du mortier de manière importante sans avoir recours à des quantités de matière organique trop élevées, ce qui permet de contenir le retard de prise provoqué systématiquement par les épaississants connus jusqu'à présent. Sans cette combinaison, le durcissement aurait lieu après 24 heures seulement.

De manière avantageuse, la composition selon l'invention est additionnée d'eau dans des proportions allant de 40 à 90 parties en poids, de préférence entre 70 et 80, pour 100 parties en poids de ciment Portland.

La composition cimentaire selon la présente invention peut être utilisée pour la réalisation de chapes liquides autonivelantes.

De manière tout à fait avantageuse, et à la différence des chapes anhydrites, son procédé de fabrication ne nécessite qu'un seul coulage, quelle que soit l'épaisseur requise de la chape. Une telle chape est ainsi utilisable au bout de 24 heures seulement. Les temps de fabrication sont alors nettement réduits par rapport aux chapes réalisées avec des compositions à base de ciment alumineux (malgré un temps d'ouvrabilité plus long), ou renfermant du sulfate de calcium, ou à base anhydrite.

Des chapes dont l'épaisseur peut dépasser environ 6 cm, voire même 8 cm ou 10 cm peuvent être facilement coulées en une seule passe. Elles permettent ainsi d'enrober rapidement des canalisations de chauffage par le sol, ou même de «rattraper» des sols de niveaux inégaux avec des différences de plus de 5 cm, par exemple.

### 4. Exemples

L'invention est illustrée ci-après par les exemples non limitatifs suivants.

La composition cimentaire fluide selon l'invention est en général préparée par malaxage des produits entrant dans sa constitution (opération de gâchage). L'ordre d'introduction desdits produits dans le malaxeur peut être quelconque. Par exemple :
a) On peut préalablement mélanger, à sec, les agents modificateurs de rhéologie (fluidifiant et épaississants) et le tensio-actif éventuel avec le ciment Portland. On obtient alors une composition utilisable pour la préparation d'une chape liquide, excepté que ladite composition ne comprend ni eau ni sable. A cette composition est ensuite ajoutée l'eau de gâchage. On malaxe ensuite l'ensemble obtenu, en général à petite vitesse. Enfin, on ajoute progressivement le ou les sables et on poursuit le malaxage à grande vitesse.
b) On peut aussi préalablement mélanger, à sec, les agents modificateurs de rhéologie et le tensio-actif éventuel avec le ou les sables et le ciment Portland. On obtient alors un mélange utilisable (en particulier sur le chantier) pour la préparation d'un mortier ou béton liquide. Il suffit ensuite d'ajouter à ce mélange l'eau de gâchage et de malaxer l'ensemble obtenu, en général à grande vitesse, pour obtenir une composition selon l'invention.
c) On peut enfin préalablement mélanger les deux types d'épaississants et une partie du fluidifiant, avec le ou les sables, le ciment Portland et l'eau. On obtient alors une composition, utilisable (en particulier en centrale à béton et en camion toupie) pour la préparation d'un mortier ou béton fluide, exempte de tensio-actif, composition ne comprenant pas la totalité du fluidifiant. Il suffit ensuite d'introduire l'autre partie de fluidifiant et le tensio-actif éventuel dans cette composition et de malaxer l'ensemble obtenu. Sa grande fluidité assure une parfaite homogénéité de la composition selon l'invention, lors de l'incorporation de la dernière partie du fluidifiant et du tensio-actif éventuel, juste avant la mise en place ou coulée.

Les matériaux utilisables sont cités ci-dessous à titre d'exemples :
■ ciment Portland CEM I ou ciment Portland composé CEM II (tel que défini par la norme NF P 15-301 : 1994)
■ Superplastifiant (fluidifiant) à base acrylate ou méthacrylate (sous forme de solution aqueuse à 33 % d'extrait sec ou sous forme sèche) :
   . SSP 104 décrit dans la demande de brevet EP-A-0 725 044 (à 31 % de matière active) qui est un terpolymère composé d'acrylate de sodium, de méthacrylate de sodium et de poly(oxyde d'éthylène)
   ou
   . Cimfluid 2000AC (à 28 % de matière active) qui comprend un poly(oxyde d'éthylène) de faible masse et un copolymère de méthacrylate de sodium et de méthacrylate de poly(oxyde d'éthylène).
   Par adjuvants à base acrylate, on entend aussi les polymères ou copolymères, tels que ceux décrits ci-dessous :
   - copolymères de a) acide acrylique ou méthacrylique et de b) hydroxy- (C₂-C₃ )alkylester de l'acide acrylique ou méthacrylique, comme ceux décrits dans la demande de brevet EP-A-0 303 747,
   - mélange comprenant au moins un copolymère d'alkényléther de formule (I), au moins un polyalkènyléther de formule (II), et d'anhydride maléique, comme anhydride, ses produits d'hydrolyse ou sels desdits produits d'hydrolyse, comme décrits dans EP-A-0 619 277,
   - copolymère de formule (I) décrite dans JP 6 048 797,
   - additif superplastifiant obtenu par terpolymérisation de monomères de formules (IV), (V) ou (VI) comme décrit dans EP-A 0 612 702,
   - sel du polymère formé par réaction d'un acide polycarboxylique avec un polymère acrylique contenant un atome d'azote, typiquement en solution aqueuse, comme décrit dans FR 2 656 297,
   - composition polymère ou un des ses sels qui est un copolymère d'un mono-ester de l'acide maléique avec un composé de formule (I), et d'un monomère de formule (II), comme définies dans FR 2 668 773,
   - copolymère statistique sous forme d'acide libre ou de sel, comportant trois types de monomères, comme décrit dans FR 2 671 090,
   - copolymère vinylique soluble dans l'eau, "représentatif" de copolymères linéaires à partir de vinylacétate et acide maléamique N-substitué, selon la formule (A) décrite dans EP-A-0 604 676,
   - agent dispersant comprenant un copolymère vinylique hydrosoluble obtenu par copolymérisation radicalaire en solution aqueuse à partir des monomères de formule (1), (2), (3) ,(4) et (5) comme décrit dans la demande de brevet EP-A-0 590 983,
   - copolymère obtenu à partir de (A), (B), (C) et (D), comme décrit dans EP-A-0 610 699,
   - polymère ou copolymère hydrosolubles d'acide carboxylique éthylénique choisi parmi les acides acrylique, méthacrylique, fumarique, maléique, itaconique, crotonique, aconitique, sinapique, mésaconique, undécylénique, angélique, hydoxy-acrylique, et l'anhydride maléique, comme décrit dans FR-A-2 699 915,
   - additif pour le contrôle de la fluidité des compositions de ciment, comprenant au moins un copolymère obtenu à partir d'un monomère (a) d'ester d'acide mono(méth)acrylique d'alkylène glycol de formule (I) et d'un monomère (b) à base d'acide (méth)acrylique de formule (II), ou bien un copolymère obtenu à partir d'un monomère (d) à base de mono(méth)allyl éther d'alcoxypolyalkylène glycol de formule (III) et d'un monomère (b) à base d'acide (méth)acrylique de formule (IV) comme défini dans FR-A-2 706 447,
   - ou tout autre superplastifiant, par exemple de type polynaphtalène sulfonate ou mélamine sulfonate.
■ Epaississants classiques (agissant par exclusion) utilisés sous forme de matière sèche :

Ils sont choisis parmi les polymères d'origine naturelle tels que les polysaccharides :
- gomme guar,
- gomme xanthane,
- caroube,
- cellulose modifiée,
- amidon modifié ou non,
ou parmi les polymères synthétiques hydrosolubles à forte masse moléculaire :
- poly(oxyde d'éthylène) à très longue chaîne,
- polyacrylates de sodium réticulés
- alcools polyvinyliques,
ou encore parmi leurs combinaisons.
■ Epaississants de type gélifiants (utilisés sous forme de solution eau-cosolvant type ether de glycol à 50 % d'extrait sec ou sous forme sèche) :
   Ces polymères hydrosolubles sont choisis parmi :
   - les ASE (Alkali Soluble Emulsion)
   - les HASE (Hydrophobically Alkali Soluble Emulsion)
   - les HEUR (Hydrophobically Modified URethan block copolymer): copolymères bloc poly(oxyde d'éthylène) urethane modifiés hydrophobes
   - les polyethers-polyols
   - les HMHEC (hydrophobically modified hydroxyethyl cellulose) : hydroxyéthyle cellulose modifiée hydrophobe.
■ Tensio-actifs :
   Ces molécules présentent une certaine miscibilité avec l'eau et ont tendance à s'accumuler à l'interface entre l'eau et l'air.
   Les tensio-actifs préférés de l'invention sont de type zwiterionique ou non ionique car ils ont un effet moussant très important et sont insensibles à toute variation de pH.
■ Sables : de granulométrie de préférence ≤ 5 mm environ.

Les mortiers fluides sont obtenus par malaxage intime dans un malaxeur de type Perrier, la durée totale de malaxage étant de 5 à 7 minutes.

Les propriétés des mortiers fluides testés sont les suivantes :

### Mesures de l'étalement :

L'étalement a été mesuré à l'aide d'un cône de dimensions Øsup x h x Øbase = 7 x 6 x 10 cm³. Le cône est rempli de mortier, puis est soulevé le plus verticalement possible. L'étalement est mesuré suivant trois diamètres, à l'aide d'un pied à coulisse. La valeur de l'étalement, correspondant à la moyenne des trois diamètres, doit être supérieure à 200 mm pour que le mortier soit considéré comme fluide et autonivelant.

### Evolution de l'étalement au cours du temps :

Des mesures d'étalement sur le mortier fluide auto-nivelant préparé comme ci-dessus sont effectuées jusqu'à une échéance de trois heures après le début du malaxage. Entre chaque mesure, le produit de la dite invention est laissé au repos et est remalaxé quelques secondes avant d'effectuer la mesure.

### Test de sédimentation :

Le mortier est coulé, juste après son gâchage, dans un tube transparent de diamètre intérieur égal à 4,3 cm et de hauteur égale à 50 cm obturé au fond. L'orifice supérieur est obturé avec un film plastique sans que celui-ci ne soit en contact avec la surface libre du mortier. Après 6 et 48 heures, à l'état durci, une observation visuelle est pratiquée. On note un éventuel ressuage d'eau, une éventuelle perte de hauteur par rapport à la position initiale de la surface du mortier, l'aspect de celle-ci, la taille et la distribution des bulles d'air le long de la paroi du tube. Enfin deux cylindres de 5 cm de hauteur sont découpés respectivement en haut et au bas du tube de 50 cm. Après démoulage, la densité des deux tronçons est ensuite déterminée par pesée hydrostatique.

### Performances mécaniques :

On réalise à partir des exemples de l'invention des éprouvettes normalisées 4 x 4 x 16 cm³ par séries de trois. Le démoulage est effectué à 24 heures, leur conservation dans le moule ayant eu lieu à 20°C. On mesure immédiatement après le démoulage la résistance en compression simple, ce qui correspond à la pression nécessaire pour faire éclater les éprouvettes que l'on compresse entre deux mâchoires (contrainte de rupture). La moyenne des résultats obtenus pour les trois éprouvettes de chaque série est présentée dans le tableau 2.

### Densité :

Elle est calculée à partir des mesures de la masse et du volume des éprouvettes confectionnées pour la détermination des performances mécaniques, les mesures étant réalisées juste après le démoulage, en effectuant la moyenne des résultats obtenus pour 3 éprouvettes.

### Relèvement des bords sous dessiccation ("curling") :

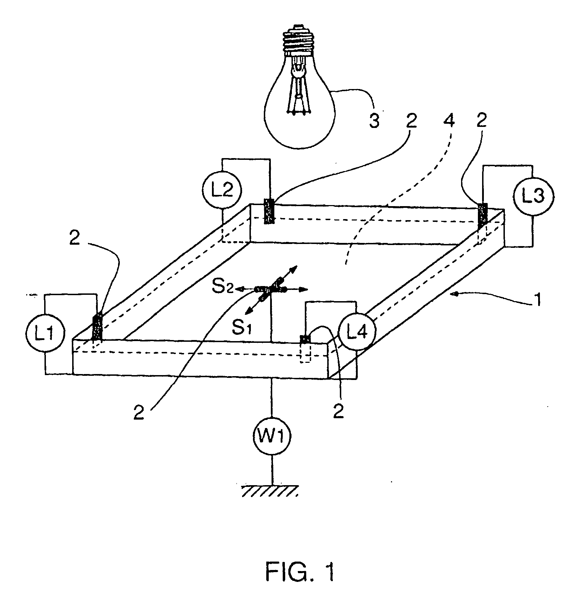

Le relèvement des bords ou «curling» est mesuré avec un dispositif de laboratoire conforme à la figure 1. Le mortier est coulé dans un moule (1) de 33 x 33 x 3 cm³. Des inserts métalliques (2) sont maintenus par un gabarit pendant les 24 premières heures. Ensuite, deux capteurs de déplacement mesurant le retrait au centre de la plaque (S₁ et S₂) et quatre capteurs de déplacement (L₁, L₂, L₃ et L₄) mesurant le relevé des bords sont fixés sur ces inserts. Un peson (W₁) permet de suivre également l'évolution de la masse. Toutes ces données sont enregistrées au cours du temps. Le dispositif est placé dans une enceinte climatique (non représentée) permettant de maintenir 20°C et 50% d'humidité relative. Un choc thermique est appliqué entre le septième et le neuvième jour (40°C en surface de l'échantillon) (4), au moyen d'une ampoule éclairante (3) située au dessus de l'échantillon (4).

Ce dispositif permet de reproduire en laboratoire le comportement d'une dalle et d'en mesurer le «curling» (figure 2), le retrait (figure 3) et l'évolution de la masse consécutive au départ d'eau (figure 4).

Le tableau 1 regroupe les compositions cimentaires présentées dans les exemples 1 à 6 suivants, et le tableau 2 les résultats des mesures réalisées sur celles-ci.

### Exemple 1

On prépare un mortier fluide selon une composition préférée de l'invention comprenant pour 100 parties en poids de ciment Portland (CPJ-CEMII 32.5) :
- 386 parties de sable ≤ 4 mm
- 74 parties d'eau
- 0,63 partie de superplastifiant à base acrylate (Cimfluid 2000AC)
- 0,11 partie de poly(oxyde d'éthylène) Mw∼4 000 000
- 0,17 partie de copolymère bloc poly(oxyde d'éthylène) d'uréthane modifié hydrophobe
- 0,11 partie de N-lauryl beta iminopropionate de sodium

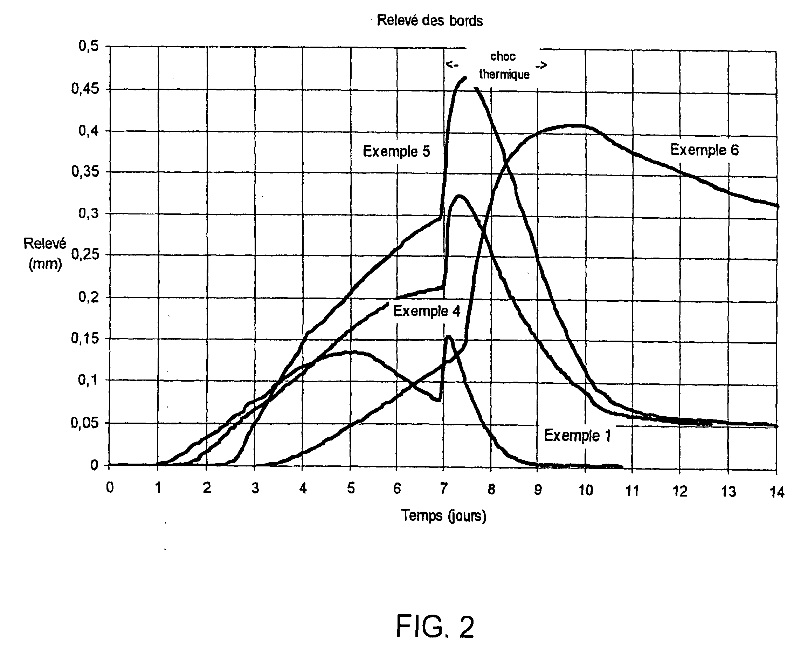

Les résultats des mesures réalisées sur ce mortier sont indiqués dans le tableau 2, et les figures 2, 3 et 4.

Le mortier est très stable, il garde la fluidité qui lui confère le caractère auto-nivelant nécessaire à la coulée au-delà de 3 heures. La résistance mécanique est satisfaisante à 24 heures (tableau 2) et autorise le passage piétonnier sur la chape dès cette échéance.

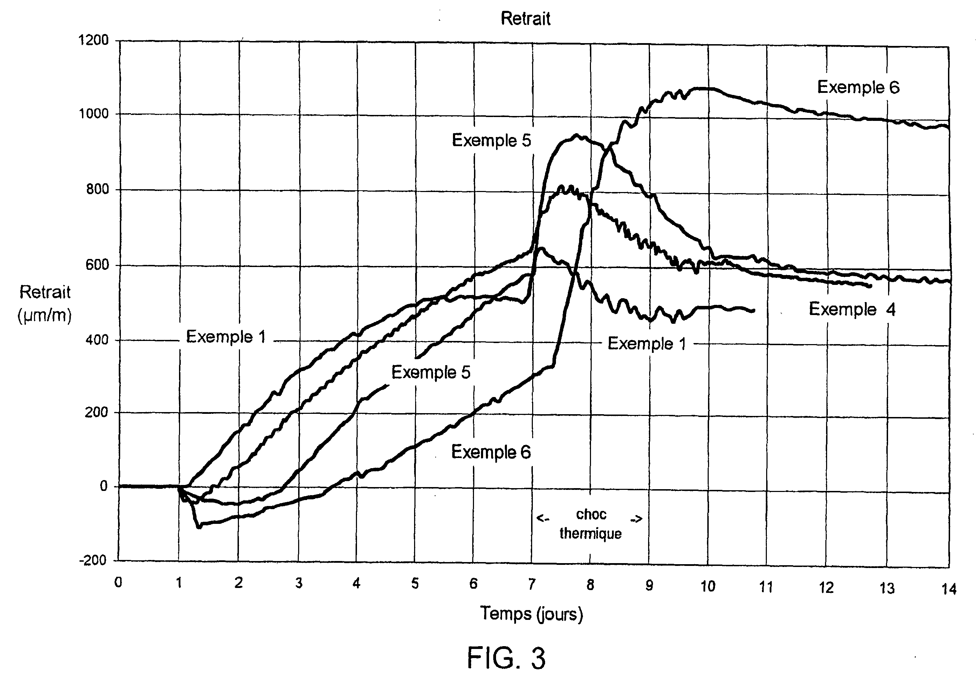

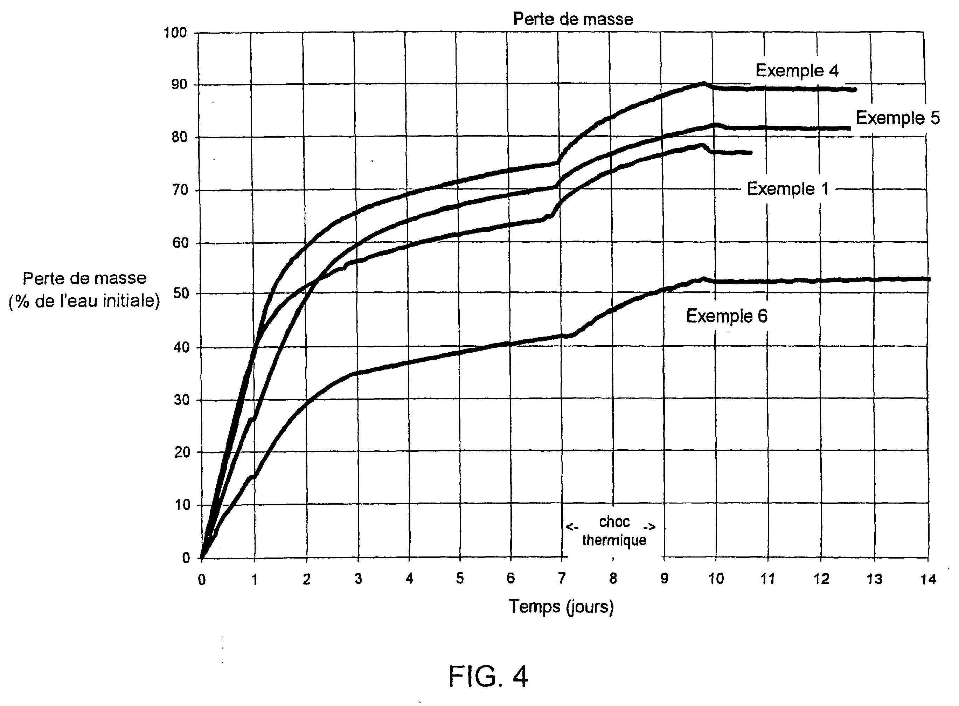

Le séchage de l'échantillon une fois durci provoque le relevé des bords (figure 2), comme on pouvait s'y attendre. Simultanément, l'échantillon subit un retrait (figure 3) et une perte de masse liée au départ de l'eau libre (figure 4). Cependant au-delà de cinq jours, les bords de l'échantillon reviennent à leur position initiale alors que le retrait tend à se stabiliser à une valeur proche de 600µm/m. A la stabilisation du retrait correspond le séchage complet de l'échantillon. L'application du choc thermique entre le septième et le neuvième jour provoque à nouveau le relevé des bords, accentue le retrait et le départ de l'eau libre encore présente dans l'échantillon sans toutefois empêcher le retour des bords à leur position initiale. Ainsi le phénomène de «curling» est bien constaté mais il disparaît rapidement. La composition du mortier permet donc la relaxation des contraintes. Le séchage n'a pas provoqué l'endommagement de l'échantillon. A terme, il conserve sa planéité initiale, ce qui était le but recherché.

### Exemple 2 (comparatif) (un seul épaississant)

On prépare un mortier fluide comprenant pour 100 parties en poids de ciment Portland (CPJ-CEMII 32.5) :
- 386 parties de sable ≤ 4 mm
- 74 parties d'eau
- 0,63 partie de superplastifiant à base acrylate (Cimfluid 2000AC)
- 0,11 partie de N-lauryl beta iminopropionate de sodium
et uniquement un épaississant agissant par exclusion stérique :
- 0,28 partie de poly(oxyde d'éthylène) Mw∼4 000 000
Les résultats de cet exemple sont commentés ci-après avec ceux de l'exemple 3.

### Exemple 3 (comparatif) (un seul épaississant)

On prépare un mortier fluide comprenant pour 100 parties en poids de ciment Portland (CPJ-CEMII 32.5) :
- 386 parties de sable ≤ 4 mm
- 74 parties d'eau
- 0,63 parties de superplastifiant à base acrylate (Cimfluid 2000AC)
- 0,11 partie de N-lauryl beta iminopropionate de sodium
et uniquement un épaississant de type gélifiant :
- 0,28 partie de copolymère bloc poly(oxyde d'éthylène) uréthane modifié hydrophobe

Les résultats permettant de comparer les comportements des compositions selon les exemples 1, 2 et 3 sont rassemblés dans les tableaux 2 et 3. On remarque que seul l'exemple 1 donne simultanément satisfaction en termes de consistance et de résistance à la sédimentation. Les exemples 2 et 3 montrent une modification de la densité entre l'état frais et l'état durci suite à une diminution de l'air entraîné. Or l'air entraîné doit être suffisant pour permettre l'établissement d'une porosité, à l'état durci, qui améliore le séchage et limite le gradient de retrait (consécutif au différentiel d'humidité). Ceci est nécessaire à l'obtention d'une faible susceptibilité au phénomène de «curling».

La comparaison des résultats des exemples 2 et 3 avec ceux de l'exemple 1 permet de constater un effet de synergie lorsque la composition cimentaire comprend les deux types d'épaississants selon l'invention.

### Exemple 4

On prépare un mortier fluide selon l'invention comprenant pour 100 parties en poids de ciment Portland (CPJ-CEMII 32.5) :
- 386 parties de sable ≤ 4 mm
- 74 parties d'eau
- 0,63 partie de superplastifiant à base acrylate (Cimfluid 2000AC)
- 0,11 partie de d'hydroxypropylguar, Mw∼220000-500000
- 0,17 partie de copolymère bloc polyurethane poly(oxyde d'éthylène) modifié hydrophobe
- 0,11 partie de N-lauryl beta iminopropionate de sodium

Les résultats des mesures sont indiqués et dans le tableau 2 et les figures 2, 3 et 4.

Cette composition du mortier diffère de celle des exemples précédents dans la nature de l'épaississant classique utilisé. Les comportements des mortiers frais (tableau ci-dessus) et durcis (tableau 2) sont très proches de ceux correspondant à la composition de l'exemple 1. La principale différence réside dans le temps au bout duquel se produit la relaxation des contraintes, plus long pour l'exemple 4 (entre sept et huit jours) que pour l'exemple 1 (cinq jours). Du fait du retard pris dans l'établissement de la relaxation des contraintes, l'amplitude du relevé est plus grande pour la composition de l'exemple 4, comme le montre la figure 2, mais, pour l'exemple 4, seul un très faible relevé des bords subsiste aux temps longs.

### Exemple 5 (comparatif) (avec anhydrite)

On prépare un mortier fluide comprenant pour 100 parties en poids de ciment Portland (CPJ-CEMII 32.5) :
- 20 parties d'anhydrite
- 390 parties de sable ≤ 4 mm
- 85 parties d'eau
- 0,7 partie de polynaphtalène sulfonate
- 0,2 partie d'amidon modifié

Les résultats des mesures sont indiqués dans le tableau 2 et les figures 2, 3 et 4.

La composition de l'exemple 5 comporte de l'anhydrite. Les caractéristiques rhéologiques du mortier frais (tableau 2) sont inférieures à celles des exemples précédents alors que la quantité d'eau rapportée à la masse de ciment est supérieure. La diminution de l'étalement est attribuable à la présence d'anhydrite qui augmente la demande en eau du mortier, effet bien connu de l'homme de l'art. Cet exemple 5 montre que sa composition, à base de ciment et d'anhydrite, permet d'éliminer, dans une certaine mesure, la pathologie du «curling» puisque au-delà de sept à huit jours de séchage se manifeste la relaxation des contraintes qui permet à l'échantillon de retrouver sa planéité initiale (figure 2). On constate, cependant, que l'amplitude du relevé des bords est très supérieure à celles observées pour les exemples selon l'invention (exemples 1 et 4).

### Exemple 6 (comparatif) (mortier pour chape autonivelante classique à compacité élevée)

On prépare un mortier fluide comprenant pour 100 parties en poids de ciment Portland (CPA-CEMI 52.5) :
- 187 parties de cendres volantes
- 357 parties de sable ≤ 4 mm
- 100 parties d'eau
- 1,75 parties de superplastifiant à base acrylate (Cimfluid 2000AC)
- 2,9 parties de silice précipitée jouant le rôle de complément granulaire

Les résultats des mesures sont indiqués et dans le tableau 2 et les figures 2, 3 et 4.

Cet exemple illustre le comportement des chapes de ciment qui présentent un endommagement sérieux lors du séchage, endommagement lié au phénomène de «curling». Le mortier présente toutes les caractéristiques requises pour obtenir une chape autonivelante, notamment la fluidité (tableau 2). Contrairement à ce qui est observé pour les compositions des exemples 1 et 4 (présente invention) et 5 (ajout d'anhydrite), aucun phénomène de relaxation des contraintes n'est observé (figure 2) pendant la durée nécessaire au séchage complet du mortier (figure 4). Certes, le relevé des bords est moins marqué pendant les premiers jours (le séchage est plus lent, la structure étant plus compacte), mais il se poursuit lorsque le séchage se prolonge jusqu'à atteindre une valeur bien supérieure à celle correspondant à chacune des compositions des exemples 1, 4 et 5, dès lors qu'au sein de ces dernières s'amorce la relaxation. Surtout, les bords restent en position relevée. L'échantillon est définitivement déformé. Toute surcharge est alors susceptible de provoquer la rupture du matériau (fissuration) y compris son propre poids.

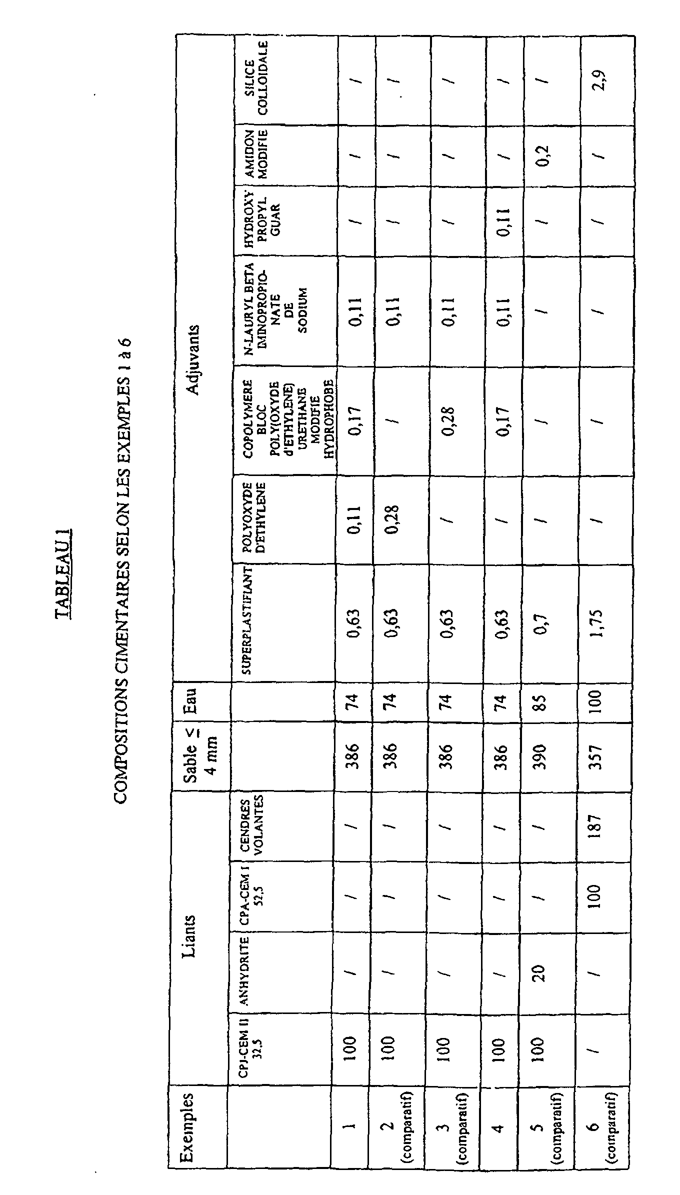

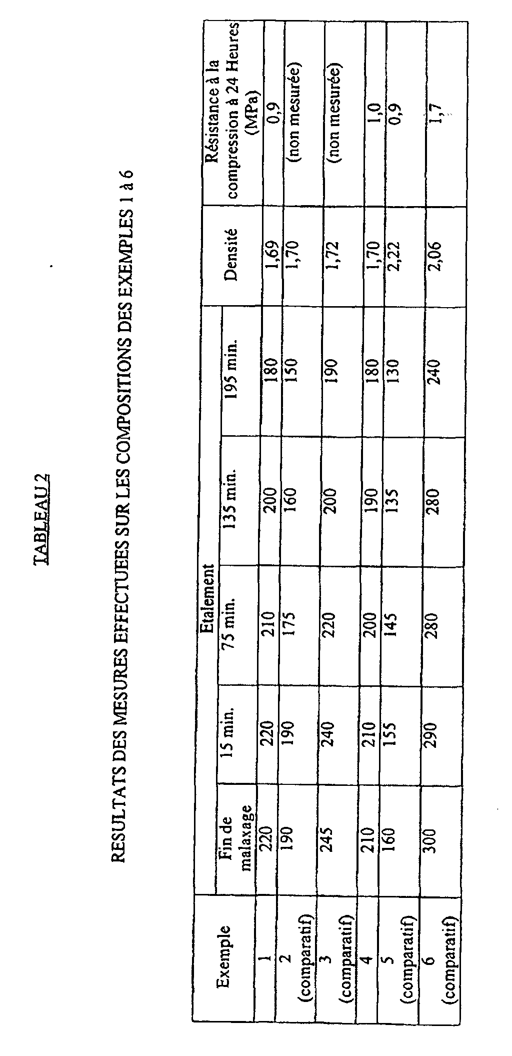

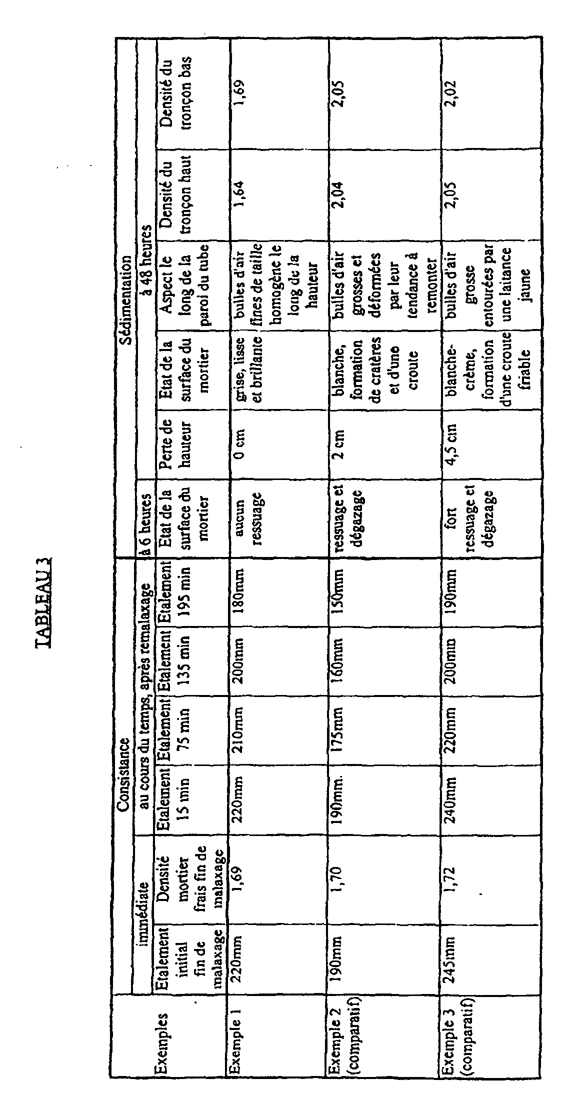

## Revendications

1. Composition cimentaire pour chape liquide à base de liant et d'adjuvants, le liant comprenant du ciment Portland et les adjuvants comprenant au moins un fluidifiant, **caractérisée en ce que** les adjuvants renferment une combinaison d'un agent épaississant agissant par exclusion stérique et d'un agent épaississant de type gélifiant.

2. Composition cimentaire selon la revendication 1 **caractérisée en ce que** le liant comprend du ciment Portland sans ajout de sulfate de calcium autre que le régulateur de prise.

3. Composition selon l'une des revendications précédentes, **caractérisée en ce qu'**elle comprend, pour 100 parties en poids de ciment Portland, de 1 à 5 parties d'un fluidifiant à base (méth)acrylate ou de type polynaphtalène sulfonate, ou mélamine sulfonate.

4. Composition selon la revendication 3, **caractérisée en ce qu'**elle comprend, pour 100 parties de ciment Portland, de 0,03 à 1 partie de fluidifiant, de 0,02 à 1 partie d'agent épaississant agissant par exclusion stérique, et de 0,01 à 0,5 partie d'agent épaississant gélifiant.

5. Composition selon la revendication 4, **caractérisée en ce qu'**elle comprend, pour 100 parties de ciment Portland, de 0,13 à 0,5 partie de fluidifiant, de 0,1 à 0,3 partie d'agent épaississant agissant par exclusion stérique, et de 0,05 à 0,15 partie d'agent épaississant gélifiant.

6. Composition selon l'une quelconque des revendications précédentes, **caractérisée en ce qu'**elle comprend également un tensio-actif.

7. Composition selon la revendication 6 **caractérisée en ce qu'**elle comprend de 0,01 à 0,15 partie de tensio-actif, pour 100 parties en poids de ciment Portland, permettant de réguler la quantité d'air entraîné entre approximativement 15 et 20 % en volume dans le matériau final.

8. Composition selon l'une quelconque des revendications précédentes, **caractérisée en ce qu'**elle est mélangée à un agrégat.

9. Composition selon la revendication 8, **caractérisée en ce que** l'agrégat est du sable de granulométrie inférieure ou égale à 5 mm environ.

10. Composition selon l'une quelconque des revendications précédentes, **caractérisée en ce qu'**elle est additionnée d'eau dans des proportions de 40 à 90 parties en poids.

11. Composition selon l'une quelconque des revendications précédentes, **caractérisée en ce que** l'épaississant agissant par exclusion stérique est choisi parmi les polysaccharides et les polymères de synthèse hydrosolubles à forte masse moléculaire.

12. Composition selon l'une quelconque des revendications précédentes **caractérisée en ce que** l'épaississant agissant par exclusion stérique est choisi parmi les éthers de cellulose, les gommes xanthane, guar ou caroube.

13. Composition selon l'une quelconque des revendications précédentes, **caractérisée en ce que** l'agent épaississant gélifiant est choisi parmi les hydrocolloïdes modifiés hydrophobes, les polysaccharides modifiés hydrophobes et les polymères hydrosolubles à base acrylique ou uréthane modifiés hydrophobes.

14. Composition selon la revendication 13 **caractérisée en ce que** l'agent épaississant gélifiant est un copolymère bloc poly(oxyde d'éthylène) uréthane modifié hydrophobe.

15. Utilisation de la composition cimentaire selon l'une des revendications précédentes pour la réalisation de chapes liquides autonivelantes.

16. Procédé de fabrication d'une chape autonivelante à partir de la composition cimentaire selon les revendications 1 à 14 **caractérisé en ce qu'**il ne nécessite qu'un seul coulage, quelle que soit l'épaisseur requise de la chape.

17. Chape autonivelante réalisée à partir de la composition cimentaire selon les revendications 1 à 14.

18. Chape autonivelante selon la revendication 17 **caractérisée en ce qu'**elle présente une densité comprise entre 1,6 et 1,9 environ.

19. Chape autonivelante selon l'une des revendications 17 ou 18 **caractérisée en ce qu'**elle présente une épaisseur supérieure à 6 cm environ.

## Claims

1. A cement composition for a liquid screed based on binder and admixtures, the binder comprising Portland cement and the admixtures comprising at least one plasticiser, **characterised in that** the admixtures include a combination of a thickening agent acting by steric hindrance and a thickening agent of gelling type.

2. A cement composition according to Claim 1, **characterised in that** the binder comprises Portland cement without an addition of calcium sulphate other than the set controlling agent.

3. A composition according to one of the preceding claims, **characterised in that** it comprises, per 100 parts by weight of Portland cement, from 1 to 5 parts of a plasticiser based on (meth)acrylate or of the polynaphthalene sulphonate type, or melamine sulphonate.

4. A composition according to Claim 3, **characterised in that** it comprises, per 100 parts of Portland cement, from 0.03 to 1 part of plasticiser, from 0.02 to 1 part of thickening agent acting by steric hindrance, and from 0.01 to 0.5 parts of gelling thickening agent.

5. A composition according to Claim 4, **characterised in that** it comprises, per 100 parts of Portland cement, from 0.13 to 0.5 parts of plasticiser, from 0.1 to 0.3 parts of thickening agent acting by steric hindrance, and from 0.05 to 0.15 parts of gelling thickening agent

6. A composition according to any one of the preceding claims, **characterised in that** it also comprises a surfactant.

7. A composition according to Claim 6, **characterised in that** it comprises from 0.01 to 0.15 parts of surfactant, per 100 parts by weight of Portland cement, which makes it possible to adjust the quantity of entrained air between approximately 15 and 20% by volume in the final material.

8. A composition according to any one of the preceding claims, **characterised in that** it is mixed with an aggregate.

9. A composition according to Claim 8, **characterised in that** the aggregate is sand of a grain size less than or equal to approximately 5 mm.

10. A composition according to any one of the preceding claims, **characterised in that** water is added thereto in proportions of 40 to 90 parts by weight.

11. A composition according to any one of the preceding claims, **characterised in that** the thickening agent acting by steric hindrance is selected from among polysaccharides and synthetic polymers which are water-soluble and have a high molecular weight.

12. A composition according to any one of the preceding claims, **characterised in that** the thickening agent acting by steric hindrance is selected from among cellulose ethers and xanthan, guar or carob bean gums.

13. A composition according to any one of the preceding claims, **characterised in that** the gelling thickening agent is selected from among hydrophobically modified hydrocolloids, hydrophobically modified polysaccharides and hydrophobically modified acrylic- or urethane-based water-soluble polymers.

14. A composition according to Claim 13, **characterised in that** the gelling thickening agent is a hydrophobically modified poly(ethylene oxide) urethane block copolymer.

15. The use of the cement composition according to one of the preceding claims for the production of self-levelling screeds.

16. A process for manufacturing a self-levelling screed from the cement composition according to Claims 1 to 14, **characterised in that** it requires only a single pouring operation whatever the required thickness of the screed.

17. A self-levelling screed produced from the cement composition according to Claims 1 to 14.

18. A self-levelling screed according to Claim 17, **characterised in that** it has a density of between 1.6 and 1.9 approximately.

19. A self-levelling screed according to one of Claims 17 or 18, **characterised in that** it has a thickness greater than approximately 6 cm.

## Patentansprüche

1. Zementzusammensetzung für Flüssigestrich auf Basis eines Bindemittels und von Zusatzmittel, wobei das Bindemittel Portland-Zement umfaßt und die Zusatzmittel mindestens einen Verflüssiger aufweisen, **dadurch gekennzeichnet, daß** die Zusatzmittel eine Kombination eines Verdickungsmittels, das durch sterischen Ausschluß wirkt, und eines Verdickungsmittels eines gelbildenden Typs enthalten.

2. Zementzusammensetzung nach Anspruch 1, **dadurch gekennzeichnet, daß** das Bindemittel Portland-Zement ohne Zugabe von Calciumsulfat, außer als Abbinderegulator, umfaßt.

3. Zusammensetzung nach einem der vorhergehenden Ansprüche, **dadurch gekennzeichnet, daß** sie pro 100 Gew.-Teile Portland-Zement 1 bis 5 Teile eines Verflüssigers auf (Meth)Acrylat-Basis oder vom Polynaphthalinsulfonat- oder Melaminsulfonat-Typ umfaßt.

4. Zusammensetzung nach Anspruch 3, **dadurch gekennzeichnet, daß** sie pro 100 Teile Portland-Zement 0,03 bis 1 Teile Verflüssiger, 0,02 bis 1 Teile Verdickungsmittel, das durch sterischen Ausschluß wirkt, und 0,01 bis 0,5 Teile eines gelbildenden Verdickungsmittels enthält.

5. Zusammensetzung nach Anspruch 4, **dadurch gekennzeichnet, daß** sie pro 100 Teile Portland-Zement 0,13 bis 0,5 Teile Verflüssiger, 0,1 bis 0,3 Teile eines Verdickungsmittels, das durch sterischen Ausschluß wirkt, und 0,05 bis 0,15 Teile eines gelbildenden Verdickungsmittels umfaßt.

6. Zusammensetzung nach einem der vorhergehenden Ansprüche, **dadurch gekennzeichnet, daß** sie auch ein oberflächenaktives Mittel enthält.

7. Zusammensetzung nach Anspruch 6, **dadurch gekennzeichnet, daß** sie 0,01 bis 0,15 Teile eines oberflächenaktiven Mittels pro 100 Gew.-Teile Portland-Zement enthält, wodurch die mitgeführte Luftmenge im Bereich von etwa 15 bis 20 Vol.-% im fertigen Material eingestellt werden kann.

8. Zusammensetzung nach einem der vorhergehenden Ansprüche, **dadurch gekennzeichnet, daß** sie mit einem Aggregat vermischt wird.

9. Zusammensetzung nach Anspruch 8, **dadurch gekennzeichnet, daß** das Aggregat Sand mit einer Granulometrie von kleiner oder gleich etwa 5 mm ist.

10. Zusammensetzung nach einem der vorhergehenden Ansprüche, **dadurch gekennzeichnet, daß** sie mit Wasser in Anteilen von 40 bis 90 Gew.-Teilen versetzt wird.

11. Zusammensetzung nach einem der vorhergehenden Ansprüche, **dadurch gekennzeichnet, daß** das Verdickungsmittel, welches durch sterischen Ausschluß wirkt, unter wasserlöslichen Polysacchariden und Synthesepolymeren mit hoher Molekülmasse ausgewählt ist.

12. Zusammensetzung nach einem der vorhergehenden Ansprüche, **dadurch gekennzeichnet, daß** das Verdickungsmittel, welches durch sterischen Ausschluß wirkt, unter Celluloseethern, Xanthangummi, Guargummi oder Johannisbrotgummi ausgewählt ist.

13. Zusammensetzung nach einem der vorhergehenden Ansprüche, **dadurch gekennzeichnet, daß** das gelbildende Verdickungsmittel unter hydrophoben modifizierten Hydrokoloiden, hydrophoben modifizierten Polysacchariden und wasserlöslichen Polymeren auf Basis von Acryl oder hydrophobem modifizierten Urethan ausgewählt ist.

14. Zusammensetzung nach Anspruch 13, **dadurch gekennzeichnet, daß** das gelbildende Verdickungsmittel ein hydrophobes modifiziertes Poly(ethylenoxid) Urethan-Block-Copolymerisat ist.

15. Verwendung der Zementzusammensetzung nach einem der vorhergehenden Ansprüche zur Herstellung von selbst-nivellierenden Flüssigestrichen.

16. Herstellungsverfahren für einen selbst-nivellierenden Estrich, ausgehend von der Zementzusammensetzung nach den Ansprüchen 1 bis 14, **dadurch gekennzeichnet, daß** es, unabhängig von der erforderlichen Dicke des Estrichs, nur einen einzigen Gießvorgang erfordert.

17. Selbst-nivellierender Estrich, der ausgehend von der Zementzusammensetzung nach den Ansprüchen 1 bis 14 hergestellt wird.

18. Selbst-nivellierender Estrich nach Anspruch 17, **dadurch gekennzeichnet, daß** er eine Dichte im Bereich von etwa 1,6 bis etwa 1,9 aufweist.

19. Selbst-nivellierender Estrich nach einem der Ansprüche 17 oder 18, **dadurch gekennzeichnet, daß** er eine Dicke von mehr als etwa 6 cm aufweist.
